# EUROPEAN PATENT APPLICATION

(11) **EP 4 552 780 A1**
(43) Date of publication of application: **14.05.2025**
(21) Application number: 23209429.2
(22) Date of filing: 13.11.2023
(51) Int. Cl.: B23D 51/00, B23D 59/00

(54) **RECIPROCATING SAW**

(71) Applicant: Hilti Aktiengesellschaft, 9494 Schaan (LI)
(72) Inventor: Haas, Günter, 86916 Kaufering (DE); Lein, Claudius, 86899 Landsberg am Lech (DE)
(74) Representative: Hilti Aktiengesellschaft Corporate Intellectual Property

(57) **Abstract**

A reciprocating saw, comprising a casing (1), an electric motor , a transmission mechanism (2) and a saw blade (3), the electric motor and the transmission mechanism (2) both being disposed in the casing (1), the saw blade (3) being mounted to the transmission mechanism (2) by means of a chuck (5), and the electric motor being capable of driving the saw blade (3) to reciprocate relative to the casing (1) by means of the transmission mechanism (2); a blow hole (4) is provided on the casing (1), the blow hole (4) being disposed on the casing (1) at a position close to the chuck (5), so that debris entering the casing (1) can be discharged to the outside from the front of the chuck (5) by external air introduced through the blow hole (4). Thus, dust and debris that have accumulated in the casing of the reciprocating saw can be removed from inside a housing of the reciprocating saw, thereby increasing the service life of the reciprocating saw and reducing the frequency and cost of maintenance.

## Description

### TECHNICAL FIELD

The present invention relates to an electric tool, in particular to a reciprocating saw.

### BACKGROUND ART

It is known that reciprocating saws are widely used to cut workpieces, such as metal, wood, bricks, ceramic tiles and/or similar objects. Reciprocating saws generally comprise a transmission mechanism for converting rotation of an electric motor to reciprocation of a blade, which is mounted to a plunger of the transmission mechanism by means of a chuck. To reduce the risk of injury and facilitate saw blade replacement, most reciprocating saws have a completely closed front region. This can prevent the user from coming into contact with moving components, such as the saw blade chuck. In addition, the saw may further comprise a control lever for locking or releasing the saw blade, so the user does not need to come into contact with the chuck, which is very hot. However, a drawback of such a design is that dust and dirt cannot be discharged from this closed front region as easily as before. Dust and dirt collect in a housing of the reciprocating saw, and can no longer be removed. This will result in various problems, such as blockage of an air channel opening, jamming or overheating of the control lever. Dirt could penetrate into the gearbox, if big amount is in the chuck area.

### SUMMARY OF THE INVENTION

The present invention provides a reciprocating saw with a dust removal structure, such that dust and debris can be removed from inside a housing of the reciprocating saw, thereby increasing the service life of the reciprocating saw and reducing the frequency and cost of maintenance.

According to an embodiment of the present invention, a reciprocating saw comprises a casing, a transmission mechanism located in the casing, and a saw blade, the saw blade being mounted to the transmission mechanism by means of a chuck, wherein the transmission mechanism drives the saw blade to reciprocate relative to the casing; at least one blow hole is provided on the casing, the blow hole being disposed on the casing at a position close to the chuck, so that debris entering the casing can be discharged to the outside from the front of the chuck by external air introduced through the blow hole. Dust or debris often accumulates at the area where the chuck and the transmission mechanism are collected, so the blow hole is provided on the casing at a position corresponding to dust accumulation so as to introduce external air, to blow the debris out of the casing from the front of the chuck.

The casing is one single part or comprises a first half-housing and a second half-housing, forming an accommodating cavity, the accommodating cavity being used to accommodate the transmission mechanism, and the blow hole being arranged to be in communication with the accommodating cavity. In this way, a space for airflow circulation is formed between the blow hole and the front of the chuck, and debris or dust in the casing can be blown out of the casing conveniently.

The blow hole is disposed on the casing at a position corresponding to a rear end of the chuck. Thus, debris or dust which has accumulated in the casing can be blown out of the casing.

There are two blow holes provided, each being disposed at a side of the casing. An advantage of having one blow hole disposed at a side of the casing is that it avoids splitting the flow of external compressed air entering through the blow hole, and furthermore, the side is the position where user operation is easiest.

The blow hole is covered by elastically deformable dust covers, the dust covers substantially covering the blow hole when the blow hole is in a non-operational state, and the dust covers deforming elastically when the blow hole is in an operational state to allow the introduction of external air into the blow hole. Here, the dust cover can prevent additional dust from entering the casing through the blow hole when the blow hole is non-operational; and when the blow hole is operational, for example when a blower is connected to the blow hole, the dust cover deforms elastically so that the blow hole is open to connect the blower.

According to the other embodiment of the present invention, a reciprocating saw, comprising a casing, a transmission mechanism located in the casing, and a saw blade. The saw blade is mounted to the transmission mechanism by means of a chuck, and the transmission mechanism drives the saw blade to reciprocate relative to the casing. A rear end of the chuck is provided with at least one first rib that extends radially inwards. When the chuck rotates to lock or release the saw blade, the ribs can scrape away dust or debris which has accumulated between the chuck and the transmission mechanism.

According to another embodiment of the present invention, a reciprocating saw comprises a casing, a transmission mechanism located in the casing, and a saw blade mounted to the transmission mechanism by means of a chuck, wherein the transmission mechanism drives the saw blade to reciprocate relative to the casing; and a control lever arranged close to the chuck and configured to lock or release the saw blade, and a rear end of the control lever is provided with at least one second rib that extends radially inwards. Thus, when the control lever or the chuck rotates to lock or release the saw blade, the ribs can scrape away dust or debris which has accumulated between the chuck and the transmission mechanism.

The transmission mechanism comprises a plunger, the chuck being mounted to a front end of the plunger, the control lever is substantially in the form of round or polygon-shaped, the control lever at least partially surrounding the chuck and being spaced apart from the chuck, and a sealing component is further provided on the plunger at a position behind the chuck, the sealing component being engaged with gearbox. The ribs extend in a space formed by chuck and the sealing component. The sealing component ensures that dust or debris will not go further into the inside of the gearbox, and instead will accumulate between the front of the sealing component and the rear of the chuck as much as possible. As the control lever and/or the chuck rotates, the first ribs and/or second ribs scrape and loosen accumulated dust or debris, and thus dust or debris can move inside the lever cylinder to the opening at the front by holding the tool downwards or by blow air through the blow holes.

The numbers of first rib and/or the second rib can be one or more, ideally four, uniformly or arbitrary distributed on the annular rear end of the control lever and/or rear end of the chuck, to ensure that the area behind the chuck is optimally covered and accumulated debris can be removed effectively.

Brushes can be mounted on the ribs, or the ribs can be sharp-edged or claw-like, so that debris or dust can be scraped away even more effectively.

Additionally, at least one blow hole is provided on the casing at a position corresponding to the ribs in the casing. The configuration whereby the ribs and the blow hole are combined further improves the efficiency of dust removal.

### BRIEF DESCRIPTION OF THE DRAWINGS

A better understanding of the embodiments mentioned can be gained from the following detailed description with reference to the drawings. It is emphasized that the various components are not necessarily drawn to scale. In fact, dimensions may be increased or decreased at will for the purpose of clear description. In the drawings, identical reference numerals denote identical elements.
- Fig. 1: is a partial perspective view of the reciprocating saw in an embodiment of the present invention.
- Fig. 2: is a partial schematic drawing of a front-end region of the reciprocating saw in the embodiment shown in Fig. 1.
- Fig. 3: is a partial schematic drawing of the reciprocating saw in another embodiment of the present invention.
- Fig. 4: is a partial section view of the reciprocating saw in the embodiment shown in Fig. 4.

### DETAILED DESCRIPTION OF THE INVENTION

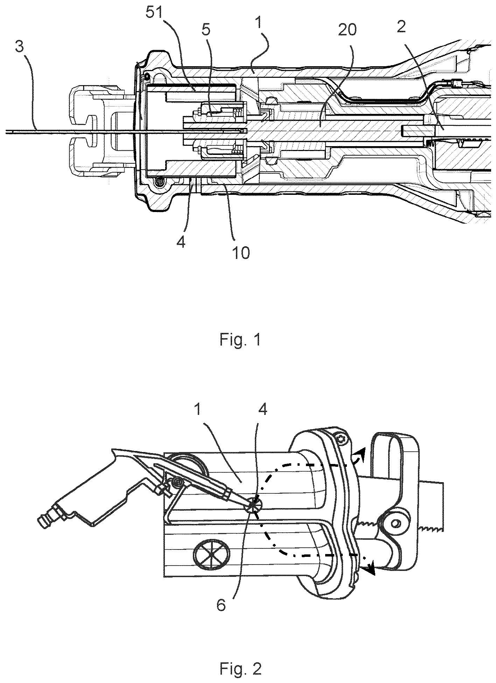

The reciprocating saw of the present invention is described below with reference to Figs. 1 - 4. The following description is merely exemplary, and does not limit the disclosed content of the present application or the applications or uses of the present invention. The terms "front", "rear", "up", "down", "left" and "right" in the present invention are used throughout this description to define various components of the reciprocating saw when arranged in an orientation in which it is to be used.

As shown in Fig. 1, the reciprocating saw comprises a casing 1. Inside the casing 1 are provided an electric motor (not shown) and a transmission mechanism 2, and a saw blade 3 connected and mounted to the transmission mechanism 2 inside a gearbox. As is well known by those skilled in the art, by means of the transmission mechanism 2, the electric motor can drive the saw blade 3 to reciprocate relative to the casing 1, and thereby perform a cutting application when the reciprocating saw is operating. The transmission mechanism 2 typically comprises a plunger 20 and a gearing (not shown) connected to the electric motor (not shown), wherein the gearing converts high-speed rotation of the motor to linear reciprocation of the plunger 20. The saw blade 3 is mounted to a front end of the plunger 20 by means of a chuck 5, and the saw blade 3 is thus able to reciprocate together with the plunger 20.

In this embodiment, at least one blow hole 4 is provided on the casing 1. Referring to Figs. 1 and 2, the blow hole 4 is disposed on the casing 1 at a position close to the chuck 5, so that debris or dust entering the casing 1 can be discharged to the outside from the front of the chuck 5 by external air introduced through the blow hole 4. Preferably, the blow hole 4 is disposed at a position corresponding to a rear end of the chuck 5. The blow hole 4 may be used for connecting an additional blower or compressed air gun; pressurized air from the blower or air gun enters the casing 1 through the blow hole 4. Dust or debris often accumulates at the position where the chuck 5 and the plunger 20 are connected, so if the blow hole 4 is arranged on the casing at a position corresponding to dust accumulation so as to introduce external air, debris can be blown out of the casing; residual debris is not likely to occur, and the risk of debris or dust flowing onwards to a region behind the motor and the gearing in the casing is avoided.

The casing 1 comprises of a first half-housing and a second half-housing. The first half-housing and the second half-housing are fitted together and form an accommodating cavity 10. It can be understood that the casing 1 could be formed as one single part and it can also form an accommodating cavity 10 inside. The transmission mechanism 2 is accommodated in the accommodating cavity 10, and the chuck 5 is also accommodated in the accommodating cavity 10. Typically, but not limited to it, the profile of the casing 1 is substantially elongated; a front-end region thereof close to the saw blade forms a tubular part which the user can grip, the chuck 5 is disposed at the frontmost end of the accommodating cavity 10 of the casing 1, the saw blade 3 is clamped on the chuck 5 and protrudes from the casing 1, and a part of the saw blade that is exposed outside the casing performs a cutting application. The blow hole 4 is arranged to be in communication with the accommodating cavity 10. Since the rear region where the transmission mechanism and the electric motor are located in the casing 1 is substantially closed, pressurized air carrying debris or dust can only flow towards the front of the casing, being discharged to the outside of the casing through a gap between the chuck 5 and the accommodating cavity 10.

According to a preferred embodiment of the present invention, the blow hole 4 comprises two or more blow holes, each being at any position of casing 1 at an area where the dirt is located.

Preferably, an elastically deformable dust cover 6 covers the blow hole 4; the dust cover substantially covers the blow hole when the blow hole 4 is in a non-operational state, and can prevent additional dust from entering the casing through the blow hole. When the blow hole 4 is in an operational state, for example when a blower is connected to the blow hole, the dust cover 6 deforms elastically so that the blow hole is open to connect a nozzle of the blower, thus allowing the introduction of external air into the blow hole. As shown in Fig. 2, the dust cover 6 may be angular elastic flaps extending radially from a circumferential edge of the blow hole towards the centre, the angular elastic flaps being arranged adjacent to each other but spaced apart. This arrangement not only ensures that the elastic flaps substantially cover the blow hole when they are not deformed, but also ensures that an external air inputting apparatus such as a blower can be connected to the blow hole 4 easily.

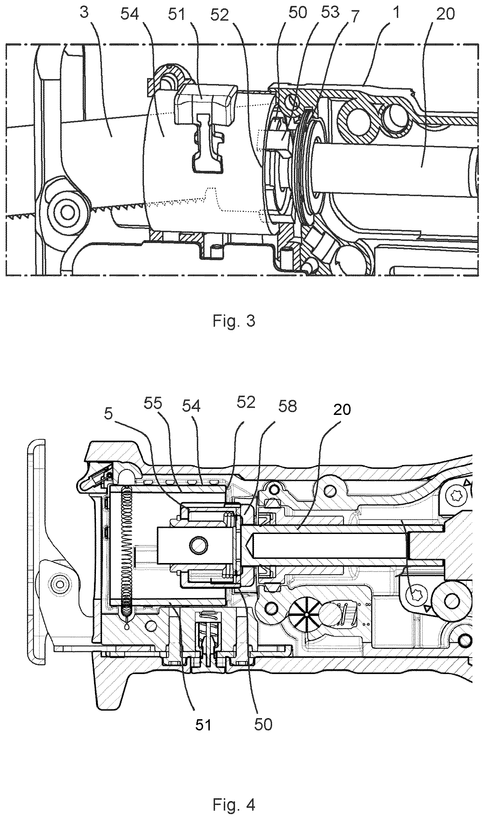

Figs. 3 and 4 show a reciprocating saw according to another embodiment of the present invention. The reciprocating saw of this embodiment has substantially the same configuration as the reciprocating saw in the previous embodiment; it also comprises a casing 1 and a transmission mechanism 2 located in the casing 1, the transmission mechanism 2 comprising a plunger 20, and a saw blade 3 being mounted to a front end of the plunger 20 by means of a chuck 5. A sealing component 7 is also provided on the plunger 20 at a position behind the chuck 5. The chuck 5 is configured to clamp the saw blade 3, being fixedly mounted to a front end of the plunger 20. A rear end 50 of the chuck 5 is provided with first ribs 58 which extend radially inwards.

In some reciprocating saws, a control lever 51 is further provided, for locking the saw blade to chuck 5 or releasing the saw blade from the chuck 5, so as to replace the saw blade. In this embodiment, a rear end 52 of the control lever 51 is provided with second ribs 53 and/or the rear end 50 of the chuck 5 is provided with first ribs 58. The first ribs 58 and/or the second ribs 53 extend radially inwards. As shown in fig. 4, dust is plugged/compressed by forth and back movement of the blade and/or chuck. When the control lever 51 or the chuck 5 rotates, the second ribs 53 and/or first ribs 58 can loosen and scrape away dust or debris which has accumulated in a space behind the chuck 5. Finally, dirt can move to the front of the opening by holding the tool downwards or by blowing air through the blow holes.

The control lever 51 is substantially in the form of round or polygon-shaped with an outer peripheral face 54 and an inner peripheral face 55. The outer peripheral face 54 is engaged with an inner surface of the casing 1 or gear housing. A narrow groove (not shown) is provided on the casing, and a push-lever capable of sliding in the narrow groove is provided on the outer peripheral face 54 of the control lever 51. Different positions to which the push-lever can slide in the slide groove correspond to a locked position in which the control lever 51 locks the saw blade 3 to chuck 5, and a released position in which the saw blade 3 is released from the chuck 5 in order to replace the saw blade 3.

The inner peripheral face 55 of the control lever 51 at least partially surrounds the chuck 5 and is spaced apart from the chuck 5. The second ribs 53 extend in a space formed by the chuck 5 and the sealing component 7. The sealing component 7 ensures that dust or debris will not go further into the inside of the gearbox, and instead will accumulate between the front of the sealing component 7 and the rear side of the chuck 5 as much as possible. As the control lever rotates, the second ribs 53 scrape and loosen accumulated dust or debris, and thus dust or debris which has accumulated between the front of the sealing component 7 and the rear side of the chuck 5 is discharged to the outside of the casing through the cylinder/tubular opening of control lever to the front between the inner peripheral face 55 of the control lever 51 and chuck 5. Alternatively, a rear end 50 of the chuck 5 is provided with first ribs 58 to scrape and loosen accumulated dust or debris as the chuck 5 rotates.

Preferably, the numbers of the first ribs 59 and/or the second ribs 53 can be more than one, ideally four ribs, uniformly or arbitrarily distributed on the rear end 52 of the control lever 51 and/or the rear end 50 of chuck 5, to ensure that the chuck 5 can be fitted conveniently and accumulated debris can be removed effectively.

The first ribs (58) and/or the second ribs (53) can be sharp-edged or claw-like. Preferably, brushes can also be mounted on the second ribs 53 and/or first ribs 58 so that debris or dust can be scraped away even more effectively.

The technical features of the embodiments above may be combined in any way. For example, a blow hole 4 is provided on the casing 1, at a position on the casing 1 that is close to the chuck 5. The rear end of the control lever 51 and/or the rear end of the chuck 5 is provided with ribs 53. Thus, dust, debris, etc. which has accumulated between the chuck and the sealing component 7 and been scraped off by the ribs 53 can be blown out of the casing 1 from the front by external pressurized air passing through the blow hole 4. Also the number of features mentioned is variable, for example, the blow hole 4 can be two or more while the ribs can be three, four, or more than four. The configuration whereby the ribs and the blow hole are combined further improves the efficiency of dust removal. To make the description concise, not all of the possible combinations of the technical features in the above embodiments have been described. However, as long as a combination of these technical features does not present a contradiction, it should be regarded as being within the scope of disclosure of this Description.

## Claims

1. Reciprocating saw, comprising a casing (1), a transmission mechanism (2) located in the casing (1), and a saw blade (3), the saw blade (3) being mounted to the transmission mechanism (2) by means of a chuck (5), and the transmission mechanism (2) driving the saw blade (3) to reciprocate relative to the casing (1), **characterized in that** at least one blow hole (4) is provided on the casing (1), the blow hole (4) being disposed on the casing (1) at a position close to the chuck (5), so that debris entering the casing (1) can be discharged to the outside from the front of the chuck (5) by external air introduced through the blow hole (4).

2. Reciprocating saw according to Claim 1, **characterized in that** the casing (1) is one single part or comprises of a first half-housing (11) and a second half-housing (12), forming an accommodating cavity (10), the accommodating cavity (10) being used to accommodate the transmission mechanism (2), and the blow hole (4) being arranged to be in communication with the accommodating cavity (10).

3. Reciprocating saw according to Claim 2, **characterized in that** the blow hole (4) is disposed on the casing at a position corresponding to a rear end (50) of the chuck (5).

4. Reciprocating saw according to Claim 3, **characterized in that** the blow holes (4) are two, each being disposed at a side of casing (1).

5. Reciprocating saw according to any one of Claims 1 - 4, **characterized in that** the blow hole (4) is covered by elastically deformable dust covers (6), the dust covers (6) substantially covering the blow hole (4) when the blow hole (4) is in a non-operational state, and the dust covers (6) deforming elastically when the blow hole (4) is in an operational state to allow the introduction of external air into the blow hole (4).

6. Reciprocating saw, comprising a casing (1), a transmission mechanism (2) located in the casing (1), and a saw blade (3), the saw blade (3) being mounted to the transmission mechanism (2) by means of a chuck (5), and the transmission mechanism driving the saw blade (3) to reciprocate relative to the casing (1); **characterized in that** a rear end (50) of the chuck (5) is provided with at least one first rib (58) that extends radially inwards.

7. Reciprocating saw according to Claim 6, **characterized in that** there are four first ribs (53), distributed on the rear end (50) of the chuck (5).

8. Reciprocating saw, comprising a casing (1), a transmission mechanism (2) located in the casing (1), and a saw blade (3), the saw blade (3) being mounted to the transmission mechanism (2) by means of a chuck (5), and the transmission mechanism driving the saw blade (3) to reciprocate relative to the casing (1); and a control lever (51) arranged close to the chuck (5) and configured to lock or release the saw blade (3), **characterized in that**
a rear end (52) of the control lever (51) is provided with at least one second rib (53) that extends radially inwards.

9. Reciprocating saw according to Claim 8, **characterized in that** a rear end (50) of the chuck (5) is provided with at least of one first rib (58) that extend radially inwards.

10. Reciprocating saw according to Claim 7 or Claim 8, **characterized in that** the transmission mechanism (2) comprises a plunger (20), the chuck (5) being mounted to a front end of the plunger (20), the control lever (51) is substantially in the form of round or polygon-shaped, the control lever (51) at least partially surrounding the chuck (5) and an inner peripheral face (55) of the control lever (51) being spaced apart from the chuck (5); a sealing component (7) is further provided on the plunger (20) at a position behind the chuck (5), the sealing component being circumferentially engaged with the inner surface of the casing (1), and the second ribs (53) extend in a space formed by the chuck (5) and the sealing component (7).

11. Reciprocating saw according to any one of Claims 8 - 10, **characterized in that** there are four second ribs (53), distributed on the rear end (52) of the control lever (51).

12. Reciprocating saw according to any one of Claims 6 - 11, **characterized in that** the first ribs (58) and/or the second ribs (53) can be sharp-edged or claw-like.

13. Reciprocating saw according to any one of Claims 6 - 12, **characterized in that** brushes can be mounted on the first ribs (58) and/or the second ribs (53).

14. Reciprocating saw according to any one of Claims 6 - 13, **characterized in that** at least one blow hole (4) is provided on the casing (1), the blow hole (4) being disposed on the casing (1) at a position close to the chuck (5), so that debris entering the casing (1) can be discharged to the outside from the front of the chuck (5) by external air introduced through the blow hole (4).

15. Reciprocating saw according to Claim 14, **characterized in that** the blow hole (4) is disposed on the casing (1) at a position corresponding to the first ribs (58) or the second ribs (53) in the casing (1).
